(19) **Europäisches Patentamt**

**European Patent Office**

**Office européen des brevets**

(11) **EP 0 982 342 B1**

(12) **EUROPEAN PATENT SPECIFICATION**

(45) Date of publication and mention
of the grant of the patent:
**23.03.2005 Bulletin 2005/12**

(51) Int Cl.$^7$: **C08G 69/26**, C08G 69/36,
C08J 5/18

(21) Application number: **99114534.3**

(22) Date of filing: **23.07.1999**

(54) **Polyamide having excellent stretching properties**

Polyamid mit ausgezeichneten Dehneigenschaften

Polyamide présentant d'excellentes propriétés d'étirage

(84) Designated Contracting States:
**DE IT**

(30) Priority: **27.08.1998 JP 24138998
22.12.1998 JP 36408298
11.01.1999 JP 428799
27.01.1999 JP 1775899**

(43) Date of publication of application:
**01.03.2000 Bulletin 2000/09**

(73) Proprietor: **Ube Industries, Ltd.
Ube-shi, Yamaguchi-ken 755-0052 (JP)**

(72) Inventors:
• **Tanioka, Rikio, c/o Ube Industries, Ltd.
Ube-shi, Yamaguchi (JP)**
• **Tanaka, Shoichi, c/o Ube Industries, Ltd.
Ube-shi, Yamaguchi (JP)**
• **Okushita, Hiroshi, c/o Ube Industries, Ltd.
Ube-shi, Yamaguchi (JP)**

(74) Representative: **Grünecker, Kinkeldey,
Stockmair & Schwanhäusser Anwaltssozietät
Maximilianstrasse 58
80538 München (DE)**

(56) References cited:
**EP-A- 0 135 815       GB-A- 1 132 039
GB-A- 1 193 487       US-A- 3 012 994
US-A- 3 937 687**

**Description**

This invention relates to a novel polyamide which has excellent stretching properties and is therefore usable for a film, monofilament, fibers and the like. More specifically, the present invention pertains to a novel polyamide which is composed essentially of a diamine and a dicarboxylic acid, a portion or the whole portion of the dicarboxylic acid being composed of a branched chain, saturated dicarboxylic acid having 6 to 22 carbon atoms; and is suited for a successive biaxial stretching film which has so far been regarded difficult to be produced from a polyamide.

Furthermore, the present invention relates to a novel polyamide having excellent stretching properties and mechanical strength and is suited for a film, monofilament, fibers and the like. More specifically, the present invention relates to a polyamide composed essentially of a diamine, a portion or the whole portion of the diamine being composed of an alicyclic diamine having one cyclohexane ring, and a dicarboxylic acid, a portion or the whole portion of the dicarboxylic acid being composed of a branched chain, saturated dicarboxylic acid having 6 to 22 carbon atoms.

Owing to excellent mechanical strength, heat resistance and gas barrier properties, a polyamide has been frequently used as a food packaging material for a retort food or the like. In recent years, reflecting an increase in the application of a polyamide to such a packaging material, the polyamide has been required to have various properties which can satisfy diversified requirements. For example, there is a strong demand for a polyamide film which has excellent practical properties such as mechanical strength and gas barrier properties, in spite of its thinness.

It is generally known that when a film prepared from a crystalline polymer is stretched, it becomes thin and is improved in gas barrier properties or mechanical strength. By making use of such properties, a thin stretched film having excellent mechanical strength has been prepared from a crystalline polymer. As is already known, when a crystalline polyamide film such as nylon 6 or nylon 66, which is a typical polyamide, is stretched, polyamide relatively easily form hydrogen bonds between molecules by stretching, which allows to proceed crystallization and therefore inevitably forms an easily stretched portion and a not easily stretched portion. As a result, a phenomenon such as uneven stretching or film break upon stretching occurs. The draw ratio permitting uniform stretching is limited and a film available from such a crystalline polyamide inevitably has insufficient thickness or mechanical strength. In order to form a uniformly-stretched film from such a polyamide, it is necessary to control stretching conditions within a specific narrow range, for example, to severely control the stretching temperature or lower the draw ratio or stretch rate. It has therefore been considered very difficult to stably obtain an industrially favorable stretched film.

The so-called successive biaxial stretching method which comprises first-stage stretching (which may hereinafter be called "primary stretching") in the extruding direction of the film, and second-stage stretching (which may hereinafter be called "secondary stretching") in a direction perpendicular to the extruding direction is known as a method which can produce a stretched film having good productivity and excellent properties. When this method is applied to the production of a stretched film of a polyamide, polyamide molecules are oriented in parallel to the film surface by primary stretching, which accelerates the formation of hydrogen bonds between polyamide molecules and allows crystallization to proceed, thereby narrowly limiting the range of conditions for secondary stretching. As a result, even if the draw ratio for secondary stretching is as low as twice, uneven stretching or film break happens to occur. Thus, it has been regarded difficult to produce a successive biaxial stretching film under an industrially stable state. There is accordingly a strong demand for the development of a polyamide material having excellent stretching properties, particularly, having good productivity and excellent stretching properties upon successive biaxial stretching.

Many polyamide copolymers or polyamide compositions having improved stretching properties have conventionally been proposed. Examples of such a polyamide copolymer include a polyamide copolymer comprising ε-caprolactam, hexamethylene isophthalamide and hexamethylene terephthalamide disclosed in JP-A-53-5250 (the term "JP-A" as used herein means an "unexamined published Japanese patent application); and a polyamide comprising at least a polymerization product of a dicarboxylic acid and an alicyclic diamino compound disclosed in JP-A-60-104312.

As such a polyamide composition, for example, a composition comprising an aliphatic polyamide and a polyamide having, as structural units, xylylenediamine and α,ω-aliphatic dicarboxylic acid is proposed in JP-A-52-104565. In JP-A-53-88053, proposed is a process for the production of a successive biaxial stretching film from a blend of an aliphatic polyamide and a polyamide containing at least 50 mol% of polyamide units composed of 2,2,4- and/or 2,4,4-trimethylhexamethylenediamine and an aromatic and/or an alicyclic dicarboxylic acid. In JP-A-62-127346, proposed is a polyamide composition comprising a blend of a copolymer polyamide available from an aliphatic polyamide and a semi-aromatic polyamide and a semi-aromatic polyamide available from an aliphatic diamine, isophthalic acid and/or terephthalic acid.

In the above-exemplified polyamide copolymers or polyamide blend compositions, hydrogen bonds between polyamide molecules upon stretching are suppressed compared with that of a polyamide such as nylon 6 and they have therefore improved stretching properties. Draw ratios not less than 3 times, however, happen to cause uneven stretching or film break so that their draw ratio cannot be increased freely. Upon secondary stretching in the successive biaxial stretching method, uneven stretching or film break occurs even at a draw ratio of about 2 times. Thus, the improvement of the stretching properties is not sufficient.

US-A-3 012 994 relates to a polyamide being formed of at least one bifunctional dibasic organic carboxylic acid component containing from 1 to 40 carbon atoms and a bifunctional organic diamine component consisting of a member selected from the group consisting of cis and trans isomers of 1,3-cyclohexanebis(methylamine) and 1,4-cyclohexanebis(methylamine). Specific examples of suitable aliphatic dicarboxylic acids include 3-methyladipic acid, glutaric acid, dimethylmalonic acid, brassylic acid, $\alpha,\alpha'$ diethyladipic acid, 5-methylsebaic acid and other related acids containing from 1 to 2 methyl or ethyl radicals on the chain of carbon atoms connecting the carboxyl radicals.

GB-A-1 193 487 discloses a polyamide being formed by polycondensing dimethyl-bis-(4-aminocyclohexyl)-methane with a dicarboxylic acid having from 6 to 10 carbon atoms or a polyamide-forming derivative thereof. The dicarboxylic acid having 6 to 10 carbon atoms may be an aliphatic dicarboxylic acid having a branched chain.

GB-A-1 132 039 relates to a polyamide being formed by condensation of dodecamethylene diamine with one or more aliphatic or aromatic dicarboxylic acids, the acid ingredient being employed may have a branched-chain form. As the amine compound, also for example 3-(aminomethyl)-3,5,5-trimethylcyclohexylamine may be used. The clear polyamides are suitable for the production of moldings, such as plates tubes, rods, stretchable filaments and threads, bristles and a great variety of injection moldings.

US-A-3 937 687 discloses a polyamide being the amidification product of a mixture of isomers of heptadecanedicarboxylic acid and a cyclical diamine bis-(4-aminocyclohexyl)methane. The polyamides are excellent engineering plastics.

It was the object of the present invention is to provide a polyamide composition excellent in stretching properties, particularly, stretching properties upon successive biaxial stretching.

It has been found that a polyamide composed essentially of a dicarboxylic acid having a specific branched chain has excellent stretching properties.

It has been found that a polyamide composed essentially of a diamine and a dicarboxylic acid, each having a specific chemical structure, has excellent stretching properties and mechanical properties.

The object of the present invention is achieved by a polyamide having excellent stretching properties, which comprises as essential components a diamine component and a dicarboxylic acid component containing a branched chain, saturated dicarboxylic acid having 6 to 22 carbon atoms, wherein the branched chain, saturated dicarboxylic acid having 6 to 22 carbon atoms is selected from the group consisting of 1,6-decanedicarboxylic acid, 2,3-dibutylbutane dioic acid, 8-ethyloctadecanedioic acid, 8,13-dimethyleicosadioic acid, 2-octylundecanedioic acid and 2-nonyldecanedioic acid, and further by a stretched film obtained by successive biaxial stretching of the polyamide.

Preferred embodiments are set forth in the subclaims.

Such findings about a polyamide composed essentially of a diamine and a dicarboxylic acid containing a branched chain, saturated dicarboxylic acid having 6 to 22 carbon atoms and properties of it have not been reported so far in literatures. It is also unknown that such a polyamide comprising a branched chain, saturated dicarboxylic acid having 6 to 22 carbon atoms has excellent stretching properties.

Moreover, findings about a polyamide composed essentially of an alicyclic diamine having one cyclohexane ring and a branched chain, saturated dicarboxylic acid having 6 to 22 carbon atoms and its properties, as described above, have not been reported so far in literatures. It is the characteristics of the present invention that the present inventors have found the polyamide comprising the above-described components has excellent stretching properties and mechanical strength.

Although it is not elucidated why the polyamide of the present invention has excellent stretching properties, particularly, stretching properties upon successive biaxial stretching which have conventionally be regarded difficult to attain, the branched chain of the dicarboxylic acid introduced into the polyamide molecular chain is presumed to affect the hydrogen bonding interaction between polyamide molecules upon stretching, thereby suppressing the formation of hydrogen bonds and suppressing the crystallization of the polyamide. In addition, the excellent mechanical strength of the polyamide resin according to the present invention is presumed to owe to the stiffness of the cyclohexane ring compared with the aliphatic chain.

The present invention will next be described in detail.

The polyamide according to the present invention is composed essentially of a diamine and a dicarboxylic acid containing a branched chain, saturated dicarboxylic acid having 6 to 22 carbon atoms. The polyamide according to the present invention may comprise these two components but a polyamide containing a lactam and/or an aminocarboxylic acid, a diamine and a dicarboxylic acid containing a branched chain, saturated dicarboxylic acid having 6 to 22 carbon atoms is more preferred in consideration of the suppression of hydrogen bonding interaction between polyamide molecules and easy preparation of a film. It should be noted that the diamine and the dicarboxylic acid are used in substantially equimolar amounts.

Specific examples of the diamine to be used in the present invention include aliphatic diamines such as ethylenediamine, tetramethylenediamine, hexamethylenediamine, undecamethylenediamine, dodecamethylenediamine, 2,2,4-trimethylhexamethylenediamine and 2,4,4-trimethylhexamethylenediamine, alicylic diamines such as bis(4-aminocyclohexyl)methane, bis(4-aminocyclohexyl)propane, 1,3-bis(aminomethyl)cyclohexane and 1,4-bis(aminomethyl)cyclohexane and aromatic diamines such as metaxylylenediamine and paraxylylenediamine. These diamines may be used either singly or in combination.

When the diamine contains an alicylic diamine having one cyclohexane ring, its amount falls within a range of from 5 to 100 mol%, more preferably 20 to 100 mol%.

The branched chain, saturated dicarboxylic acid having 6 to 22 carbon atoms to be used in the present invention is selected from the group consisting of 1,6-decanedicarboxylic acid (which may be called "2-butyloctanedioic acid"), 2,3-dibutylbutanedioic acid, 8-ethyloctadecanedioic acid, 8,13-dimethyleicosadioic acid, 2-octylundecanedioic acid and 2-nonyldecanedioic acid. They may be used either singly or in combination. Among them, 1,6-decanedicarboxylic acid is preferred. The branched chain, saturated dicarboxylic acid having 6 to 22 carbon atoms is available by the known process, for example, oxidative destruction of cyclohexane, hydrolysis of 7-cyanoundecanoic acid, hydroformylation of an unsaturated carboxylic acid such as oleic acid, Kochcarboxylation or Reppe-carboxylation.

Specific examples of the dicarboxylic acid to be used in the present invention, in addition to the above-exemplified branched chain, saturated dicarboxylic acids having 6 to 22 carbon atoms, include aliphatic dicarboxylic acids such as adipic acid, suberic acid, azelaic acid, sebacic acid and dodecanedioic acid, alicyclic dicarboxylic acids such as 1,4-dicarboxycyclohexane and aromatic dicarboxylic acids such as isophthalic acid, terephthalic acid and naphthalenedicarboxylic acid. They may be used either singly or in combination. The branched chain, saturated dicarboxylic acid having 6 to 22 carbon atoms is used in an amount ranging from 5 to 100 mol%, preferably 10 to 100 mol%, more preferably 20 to 100 mol%, based on the dicarboxylic acid. When the amount of the branched chain, saturated dicarboxylic acid having 6 to 22 carbon atoms is less than the above-described lower limit, improving effects for stretching properties would be reduced. When the amount exceeds the upper limit, on the other hand, practical properties such as mechanical strength happen to deteriorate in spite of an improvement in the stretching properties. Even a small amount of the branched chain, saturated dicarboxylic acid having 6 to 22 carbon atoms brings about large improving effects for stretching properties.

The diamine and the dicarboxylic acid containing a branched chain, saturated dicarboxylic acid having 6 to 22 carbon atoms are used in substantially equimolar amounts. They may be used as they are or as a nylon salt obtained therefrom by the known process.

Specific examples of the lactam to be used in the present invention include $\alpha$-pyrrolidone, $\epsilon$-caprolactam, $\omega$-enantholactam, $\alpha$-piperidone, $\omega$-undecanelactam and $\omega$-dodecanolactam. Specific examples of the aminocarboxylic acid include 6-aminocaproic acid, 7-aminoheptanoic acid, 8-aminooctanoic acid, 9-aminononanoic acid, 10-aminocaproic acid, 11-aminoundecanoic acid and 12-aminododecanoic acid. These lactams or aminocarboxylic acids may be used either singly or in combination.

When the polyamide of the present invention comprises a lactam and/or an aminocarboxylic acid, a diamine and a dicarboxylic acid containing a branched chain, saturated dicarboxylic acid having 6 to 22 carbon atoms, they are contained in amounts of 50 to 99.95 mol%, preferably 70 to 99.95 mol%, more preferably 90 to 99.95 mol%; 0.025 to 25 mol%, preferably 0.025 to 15 mol%; and 0.025 to 25 mol%, preferably 0.025 to 15 mol%, respectively based on the total amount of the polyamide. In the dicarboxylic acid, the branched chain, saturated dicarboxylic acid having 6 to 22 carbon atoms is contained in an amount of 5 to 100 mol%, preferably 10 to 100 mol%, more preferably 20 to 100 mol%.

Amounts of the lactam and/or aminocarboxylic acid less than the above-described lower limit deteriorate mechanical strength or make it difficult to form a film. Amounts exceeding the upper limit, on the other hand, lower stretching properties.

The polyamide according to the present invention is produced by a known batch process or continuous process. As the apparatus to be used for the production, a known polyamide-producing apparatus such as batch reactor, single-tank-type or multiple-tank-type reactor, tubular-type reactor or kneading extruder, for example, uniaxial kneading extruder or biaxial kneading extruder can be employed. Examples of the polymerization process usable in the present invention include known processes such as melt polymerization, solution polymerization and solid-phase polymerization. These polymerization processes may be used either singly or in combination as needed.

For example, the above-described raw materials and water are charged in a pressure container, followed by polycondensation under pressure at a temperature range of from 200 to 350°C under a sealed condition. Under pressure reduced to atmospheric pressure or under reduced pressure, polymerization is effected at a temperature range of from 200 to 350°C to increase the molecular weight, whereby the target polyamide can be obtained. As water employed upon polycondensation, deionized water free of oxygen or distilled water is desired and the amount of it is usually 1 to 150 parts by weight based on 100 parts by weight of the raw materials constituting the polyamide.

The diamine and dicarboxylic acid containing the branched chain, saturated dicarboxylic acid having 6 to 22 carbon atoms may be charged in the pressure container as they are or as a nylon salt obtained by mixing substantially equimolar amounts of them with water or an alcohol to dissolve the former in the latter.

The polyamide having an increased molecular weight is taken out from the pressure container, cooled with water or the like and then pelletized. It should be noted that when $\epsilon$-caprolactam and/or aminocaproic acid are used as a raw material, unreacted monomers remain in the resulting polyamide so that such unreacted monomers are extracted by washing with hot water. The polyamide according to the present invention has a molecular weight ranging from 1.5 to 5.0, preferably 2.0 to 4.0 in terms of a relative viscosity ($\eta$r) as measured by the method described in JIS K6810. No particular limitation is imposed on the nature of the terminal group of the polyamide or its concentration or molecular weight distribution.

Upon polymerization of the polyamide of the present invention, it is possible to add phosphoric acid, phosphorous acid, hypophosphorous acid or polyphosphoric acid for the purpose of polymerization promotion or deterioration prevention if necessary. Such a phosphorus base compound is usually added in an amount of 50 to 3,000 ppm relative to the polyamide to be prepared. For the purpose of adjusting the molecular weight of the polyamide or stabilizing its melt viscosity at the forming or molding time, a molecular weight regulator, for example, an amine such as laurylamine, stearylamine, hexamethylenediamine or metaxylylenediamine or a carboxylic acid such as acetic acid, benzoic acid, hexanedioic acid, isophthalic acid or terephthalic acid can be added. Although the amount of this molecular weight regulator differs depending on the reactivity of the regulator or polymerization conditions, it is determined as needed so that the intended polyamide has a relative viscosity within a range of 1.5 to 5.0.

From the polyamide of the present invention, a film can be formed by a known film formation process, for example, a process using an extruder such as a flat process, an inflation process, a tubular process, a solvent casting process or a melt-press process. For example, a film is prepared by adding, to the polyamide of the present invention, a lubricant or slip agent such as calcium stearate, bisamide compound, silica or talc is added, feeding the resulting mixture to a melt extruder equipped with a flat die, from which the resulting mixture is melt extruded at a temperature not less than the melting point of the polyamide but not greater than 320°C, preferably at a temperature higher by 10°C than the melting point of the polyamide to 300°C, and then cooling the extrudate by a cooling roll adjusted to 0 to 100°C. The film stretching can be carried out as a successive step to the film formation or after the completion of the winding-up of the film, stretching can be carried out as another step.

A description will next be made of the film formation by a successive biaxial stretching method. First, an unstretched film is formed by adding a lubricant or slip agent such as calcium stearate, bisamide compound, silica or talc to the polyamide of the present invention as needed and then melt-extruding the resulting mixture by a melt extruder equipped with a flat die. The resulting unstretched film may be stretched successively or may be stretched after completion of the winding-up. The successive biaxial stretching method comprises a primary stretching step in the extruding direction of the film, more specifically, a step of stretching at a draw ratio of 2 to 5 times, preferably 2.5 to 4 times within a temperature range not less than the glass transition temperature (which will hereinafter be abbreviated as "Tg") of the polyamide to be employed, usually, Tg to (Tg + 50)°C; and a secondary stretching step in the direction perpendicular to the extruding direction, more specifically, a step of stretching at a draw ratio of 2 to 5 times, preferably 2.5 to 4 times within a temperature range not less than the temperature upon primary stretching, usually, (the temperature upon primary stretching) to (a temperature 20°C higher than the temperature upon primary stretching), and heat-setting the resulting film within a temperature ranging from not less than 120°C but not greater than the melting point of the polyamide.

Within an extent not damaging the advantages of the present invention, it is possible to add, to the polyamide of the present invention, an additive such as thermal stabilizer, ultraviolet absorber, optical stabilizer, antioxidant, antistatic, tackifier, sealing property improver, anti-fogging agent, mold release agent, impact resistance improver, plasticizer, pigment, dye, perfume and/or reinforcing material.

The polyamide according to the present invention is suited as a material for a film, particularly, for a uniaxial stretching film, a simultaneous biaxial stretching film or a successive biaxial stretching film. It is particularly suited as a material for the successive biaxial stretching film. It can be used favorably for a monofilament or fibers which is able to have improved properties by stretching. The monofilament or fibers can be produced by a known melt spinning method at a temperature not less than the melting point of the polyamide to be employed but not greater than 320°C. The polyamide according to the present invention is also usable for the production of products molded or formed by injection molding, compression molding or vacuum forming.

[Examples]

The present invention will hereinafter be described specifically by examples and comparative examples. It should be borne in mind that the values indicated in examples and comparative examples were measured by the below-described methods.

1) Measurement of $\eta$r (relative viscosity) of polyamide

In accordance with JIS K6810, measurement was carried out at a polyamide concentration of 1 wt/vol.% and 25°C by using an Ubbelohde viscometer and, as a solvent, 98 wt.% concentrated sulfuric acid.

2) Measurement of the whole molecule planar orientation when stretched (primary stretching) in the extruding direction of a film

An unstretched sample film of 92 mm long and 92 mm wide was attached to the drawing bath of a biaxial stretching machine "BIX-703" (trade name; manufactured by Iwamoto Seisakusho) adjusted to have a predetermined ambient temperature (each of 50°C, 60°C and 70°C) and preheated in the ambient temperature for 20 seconds. It was then stretched at a draw ratio of 3.2 times in the extruding direction of a film at a deformation rate of 35 mm/sec and heat-set at 200°C, whereby a test film for the measurement of the whole-molecule planar orientation was prepared. With regards to the resulting film, the refractive index (Nx) in the drawing direction, the refractive index (Ny) in the crosswise direction and refractive index (Nz) in the thickness direction were measured by an automatic birefringence refractometer "KOBRA-21ADH" (trade name; manufactured by Ohji Keisokukiki) and the whole-molecule planar orientation (P) was determined by the following equation (1):

$$P = \{(Nx + Ny) / 2\} - Nz \qquad\qquad (1)$$

wherein P represents the whole-molecule planar orientation of a stretched film, Nx represents a refractive index in the drawing direction of the film, Ny represents a refractive index in the crosswise direction and Nx represents a refractive index in the thickness direction.

The smaller the value of P, the smaller the orientation of polyamide molecules and the better the stretching properties.

3) Measurement of a draw ratio at break upon secondary stretching by the successive biaxial stretching method

A sample film was attached to the drawing bath of a biaxial stretching machine "BIX-703" (trade name; manufactured by Iwamoto Seisakusho) adjusted to have an ambient temperature of 60°C and preheated for 20 seconds at the ambient temperature. The film was then subjected to a primary stretching at a draw ratio of 3.0 times at a deformation rate of 35 mm/sec in the extruding direction of the film, followed by secondary stretching at a deformation rate of 35 mm/sec in the direction perpendicular to the extruding direction until film break occurred. The draw ratio at break was measured.

It should be noted that the draw ratio is a value of the length of the stretched sample divided by the length of the unstretched sample.

4) Measurement of tensile modulus, tensile breaking stress and elongation at break

From a film to be measured, a test piece in the form of a 10 mm x 120 mm strip was cut out and measurement was conducted in accordance with ASTM D882.

EXAMPLE 1

In a 5-liter pressure vessel equipped with a stirrer, a thermometer, a manometer, a pressure controller and a polymer outlet, 2200 g of ε-caprolactam (which will hereinafter be abbreviated as "CL"), 22.8 g of hexamethylenediamine, 45.2 g of 1,6-decanedicarboxylic acid (which will hereinafter be abbreviated as "1,6-DDA") and 119 g of distilled water were charged. Pressurization with nitrogen and relaxation of pressure were repeated several times. After purged with nitrogen, the pressure vessel was heated at 240°C. The contents were reacted at 240°C for 4 hours under stirring, followed by heating at 270°C. The pressure was then relaxed to a gauge pressure of 0 MPa over 2 hours. While feeding with a nitrogen gas was continued at 150 ml/min, the reaction was effected for 6 hours at 270°C under stirring. After termination of the stirring, the strip-like polyamide in a molten state was taken out from the polymer outlet and cooled with water, followed by pelletization, whereby 1780 g of pellets were obtained. After washing for several hours under running hot water of 90 to 95°C, the pellets were vacuum dried at 80°C for 24 hours. The polyamide thus obtained was found to have ηr of 3.43.

With 1500 g of the resulting polyamide, 0.45 g of calcium stearate was mixed and the mixture was fed to a melt extruder equipped with a coat-hanger type flat die. After molten at 260°C, the mixture was extruded on a cooling roll adjusted to about 40°C and formed into an unstretched film of 120 μm in thickness. Until the evaluation of the stretching properties, the resulting unstretched film was stored in an aluminum bag to avoid moisture absorption. From the resulting unstretched film, a sample of 92 mm long and 92 mm wide was cut out. After preheating at an ambient temperature of 50°C for 20 seconds by a biaxial stretching machine "BIX-703" (trade name; manufactured by Iwamoto Seisakusho), the film was subjected to primary stretching at a draw ratio of 3.2 times, a stretch rate of 35 mm/sec and the same temperature in the extruding direction, whereby a stretched film was formed. In a similar manner, films subjected to primary stretching at ambient temperatures of 60°C and 70°C were formed, respectively. The whole-molecule planar orientation of each of the resulting films was measured and results are shown in Table 1. The film subjected to primary stretching at 60°C and draw ratio of 3.0 times was subjected to secondary stretching at a stretch rate of 35 mm/sec and the same temperature in the direction perpendicular to the extruding direction until the film break occurred. The draw ratio at break was found to be 4.3 times.

EXAMPLE 2

In a similar manner to Example 1 except that the amounts of hexamethylenediamine, 1,6-DDA and distilled water were changed to 7.45 g, 14.8 g and 117 g, respectively, a polyamide was obtained. The resulting polyamide was found to have $\eta r$ of 3.47. The whole-molecule planar orientation of the stretched film obtained by forming and primary stretching of the polyamide in a similar manner to Example 1 was measured. The results are shown in Table 1. The film subjected to primary stretching at 60°C and a draw ratio of 3.0 times was subjected to secondary stretching at a stretch rate of 35 mm/sec and the same temperature in the direction perpendicular to the extruding direction until film break occurred. The draw ratio at break was found to be 3.0 times.

COMPARATIVE EXAMPLE 1

In a similar manner to Example 1 except that 2200 g of CL and 116 of distilled water were charged without the addition of hexamethylenediamine and 1,6-DDA, a polyamide (nylon 6) was prepared. The resulting polyamide was found to have $\eta r$ of 3.57. The whole-molecule planar orientation of the stretched film obtained by forming and primary stretching of the polyamide in a similar manner to Example 1 was measured. The results are shown in Table 1. The film subjected to primary stretching at 60°C and a draw ratio of 3.0 times was subjected to secondary stretching at a stretch rate of 35 mm/sec and the same temperature in the direction perpendicular to the extruding direction until film break occurred. The draw ratio at break was found to be 1.3 times.

COMPARATIVE EXAMPLE 2

In a similar manner to Example 1 except that 2200 g of CL, 30.1 g of hexamethylenediamine, 38.9 g of adipic acid instead of 1,6-DDA and 119 g of distilled water were charged, a polyamide (a copolymer of nylon 6 and nylon 66) was obtained. The resulting polyamide was found to have $\eta r$ of 3.50. The whole-molecule planar orientation of the stretched film obtained by forming and primary stretching of the polyamide in a similar manner to Example 1 was measured. The results are shown in Table 1. The film subjected to primary stretching at 60°C and a draw ratio of 3.0 times was subjected to secondary stretching at a stretch rate of 35 mm/sec and the same temperature in the direction perpendicular to the extruding direction until film break occurred. The draw ratio at break was found to be 2.5 times.

EXAMPLE 3

In a similar manner to Example 1 except that 31.7 g of a 1:1 (molar ratio) mixture of 2,2,4-trimethylhexamethylenediamine and 2,4,4-trimethylhexamethylenediamine was replaced for hexamethylenediamine, and 68.5 g of 8-ethyloctadecanedioic acid was replaced for 1,6-DDA, a polyamide was obtained. The resulting polyamide was found to have $\eta r$ of 3.55. The whole-molecule planar orientation of the stretched film obtained by forming and primary stretching of the polyamide in a similar manner to Example 1 was measured. The results are shown in Table 1.

The film subjected to primary stretching at 60°C and a draw ratio of 3.0 times was subjected to secondary stretching at a stretch rate of 35 mm/sec and the same temperature in the direction perpendicular to the extruding direction until film break occurred. The draw ratio at break was found to be 3.6 times.

EXAMPLE 4

In a similar manner to Example 1 except that 31.7 g of a 1:1 (molar ratio) mixture of 2,2,4-trimethylhexamethylenediamine and 2,4,4-trimethylhexamethylenediamine was replaced for hexamethylenediamine and 74.0 g of 8,13-dimethyleicosadioic acid was replaced for 1,6-DDA, a polyamide was obtained. The resulting polyamide was found to have $\eta r$ of 3.39. The whole-molecule planar orientation of the stretched film obtained by forming and primary stretching of the polyamide in a similar manner to Example 1 was measured. The results are shown in Table 1.

The film subjected to primary stretching at 60°C and a draw ratio of 3.0 times was subjected to secondary stretching at a stretch rate of 35 mm/sec and the same temperature in the direction perpendicular to the extruding direction until film break occurred. The draw ratio at break was found to be 3.9 times.

Table 1

| Example No. | Whole-molecule planar orientation x10$^3$ | | |
|---|---|---|---|
| | Stretching temperature 50°C | Stretching temperature 60°C | Stretching temperature 70°C |
| Example 1 | 12.1 | 13.0 | 14.0 |
| Example 2 | 17.3 | 18.7 | 20.7 |
| Comp. Ex. 1 | 18.0 | 21.9 | 25.6 |
| Comp. Ex. 2 | 17.8 | 20.7 | 23.7 |
| Example 3 | 16.2 | 17.8 | 19.9 |
| Example 4 | 16.9 | 18.4 | 20.3 |

EXAMPLE 5

A polyamide prepared in a similar manner to Example 1 was extruded by a melt extruder "CS-40-26N" (trade name; manufactured by Uniplus) at a cylinder temperature of 280°C, whereby a monofilament having a diameter of 2 mm was obtained. The resulting monofilament was attached to a handy-type stretching machine, preheated for 5 minutes in a heating oven having an ambient temperature of 60°C and then stretched at a stretch rate of 5 mm/sec and the same temperature. This procedure was repeated 5 times. Each time, the monofilament could be stretched to a draw ratio of 5.5 times without break.

COMPARATIVE EXAMPLE 3

A polyamide prepared in a similar manner to Comparative Example 1 was extruded by a melt extruder "CS-40-26N" (trade name; manufactured by Uniplus) at a cylinder temperature of 280°C, whereby a monofilament having a diameter of 2 mm was obtained. The resulting monofilament was attached to a handy-type stretching machine, preheated for 5 minutes in a heating oven having an ambient temperature of 60°C and then stretched at a stretch rate of 5 mm/sec and the same temperature. This procedure was repeated 5 times. Each time, the monofilament was broken at a draw ratio within a range of 3.7 times to 4.6 times.

EXAMPLE 6

In a similar manner to Example 1 except that 1440 g of 6-aminocaproic acid, 348 g of hexamethylenediamine, 517.5 g of 1,6-DDA, 109.5 g of adipic acid and 86 g of distilled water were charged in a 5-liter pressure vessel equipped with a stirrer, a thermometer, a manometer, a pressure controller and a polymer outlet, a polyamide was prepared. The resulting polyamide was found to have ηr of 3.32. A film was formed from the resulting polyamide in a similar manner to Example 1, subjected to primary stretching at 60°C to a draw ratio of 3.0 times and then stretched at a stretch rate of 35 mm/sec and the same temperature in the direction perpendicular to the extruding direction until film break occurred. The draw ratio at break was found to be 4.8 times.

EXAMPLE 7

In a 5-liter pressure vessel equipped with a stirrer, a thermometer, a manometer, a pressure controller and a polymer outlet, 2353 g of CL, 34.7 g of bis(4-aminocyclohexyl)methane, 38.0 g of 1,6-DDA and 128 g of distilled water were charged. Pressurization with nitrogen and relaxation of pressure were repeated several times. After purged with nitrogen, the pressure vessel was heated to 240°C. The contents were reacted at 240°C for 3 hours under stirring, followed by heating to 270°C. The gauge pressure was then reduced to 0 MPa over 1.5 hours. While feeding with a nitrogen gas was continued at 150 ml/min., the reaction was effected for 7.5 hours at 270°C under stirring. After the termination of the stirring, the strip-like polyamide in a molten state was taken out from the polymer outlet and cooled with water, followed by pelletization, whereby 1950 g of pellets were obtained. After washing for several hours under running hot water of 90 to 95°C, the pellets were dried in a vacuum drier of 80°C for at least 24 hours and 1740 g of the polyamide was obtained in the form of pellets. The resulting polyamide was found to have ηr of 3.52.
With 1500 g of the resulting polyamide, 0.45 g of calcium stearate was mixed and the mixture was fed to an extruder equipped with a coat-hanger type flat die. After kneading under a molten state at 260°C, the mixture was extruded on a cooling roll adjusted to about 40°C and formed into an unstretched film of 120 μm in thickness. Until the evaluation of the stretching properties, the resulting unstretched film was stored in an aluminum bag to avoid moisture absorption. Films of 92 mm long and 92 mm wide cut out from the resulting unstretched film were attached to a biaxial stretching machine "BIX-703" (trade name; manufactured by Iwamoto Seisakusho). After preheating under an ambient temperature of each of 50°C, 60°C and 70°C for 20 seconds, the film was stretched to a draw ratio of 3.2 times at a stretch rate of 35 mm/sec and the same temperature in the extruding direction, whereby a stretched film was formed. The whole-molecule planar orientation of each of the resulting films was measured and results are shown in Table 2.

A film sample of 92 mm long and 92 mm wide cut out from the unstretched film was attached to a biaxial stretching machine "BIX-703" (trade name; manufactured by Iwamoto Seisakusho). After preheating at an ambient temperature of 60°C for 20 seconds, the film sample was subjected to simultaneous biaxial stretching at a deformation rate of 35 mm/sec, whereby the film was stretched in machine and transverse directions each at a draw ratio of 3.1 times. The stretched film was heat-set at 180°C for 90 seconds to yield a simultaneous biaxial stretching film. With regards to the resulting simultaneous biaxial stretching film, the tensile modulus, tensile breaking stress and elongation at break were measured and the results are shown in Table 3.

A film sample of 92 mm long and 92 mm wide cut out from the unstretched film was attached to a biaxial stretching machine "BIX-703" (trade name; manufactured by Iwamoto Seisakusho). After primary stretching at 60°C to a draw ratio of 3 times in the extruding direction, the film sample was subjected to secondary stretching at a deformation rate of 35 mm/sec and the same temperature in the direction perpendicular to the extruding direction until it was broken. The stretching properties of the resulting film in successive biaxial stretching were evaluated. Upon secondary stretching, the film break occurred at a draw ratio of 4.3 times and the film had been substantially uniformly stretched until the break occurred.

EXAMPLE 8

In a similar manner to Example 7 except that amounts of CL, bis(4-aminocyclohexyl)methane, 1,6-DDA and distilled water charged were 2208 g, 11.65 g, 10.65 g and 248 g, 1615 g of a polyamide was obtained in the form of pellets. The resulting polyamide had a relative viscosity of 3.48.

Using 1500 g of the resulting polyamide pellets, an unstretched film, stretched film and simultaneous biaxial stretching film were prepared in a similar manner to Example 7. The whole-molecule planar orientation of the stretched film and tensile modulus, tensile breaking stress and elongation at break of the simultaneous biaxial stretching film were measured. The results are shown in Tables 2 and 3.

As in Example 7, stretching properties in the successive biaxial stretching were also evaluated. Upon secondary stretching, the film break occurred at a draw ratio of 3.3 times and the film had been substantially uniformly stretched until the break occurred.

EXAMPLE 9

In a similar manner to Example 7 except that CL, 1,6-DDA, adipic acid, 1,3-bisaminomethylcyclohexane, hexamethylenediamine and distilled water were used as raw materials and they were charged in amounts of 2134 g, 40.8 g, 14.6 g, 25.2 g, 11.6 g and 248 g, 1630 g of a polyamide was obtained in the form of pellets. The resulting polyamide had a relative viscosity of 3.50.

Using 1500 g of the resulting polyamide pellets, an unstretched film, stretched film and simultaneous biaxial stretching film were prepared in a similar manner to Example 7. The whole-molecule planar orientation of the stretched film and tensile modulus, tensile breaking stress and elongation at break of the simultaneous biaxial stretching film were measured. The results are shown in Tables 2 and 3.

As in Example 7, stretching properties in the successive biaxial stretching were also evaluated. Upon secondary stretching, the film break occurred at a draw ratio of 3.9 times.

EXAMPLE 10

In a similar manner to Example 7 except that 56.5 g of 8-ethyloctadecanedioic acid was replaced for 1,6-DDA, a polyamide was obtained in the form of pellets. The resulting polyamide had $\eta r$ of 3.55.

Using 1500 g of the resulting polyamide pellets, an unstretched film, stretched film and simultaneous biaxial stretching film were prepared in a similar manner to Example 7. The whole-molecule planar orientation of the stretched film and tensile modulus, tensile breaking stress and elongation at break of the simultaneous biaxial stretching film were measured. The results are shown in Tables 2 and 3.

As in Example 7, stretching properties in the successive biaxial stretching were also evaluated. Upon secondary stretching, the film break occurred at a draw ratio of 3.6 times.

EXAMPLE 11

In a similar manner to Example 7 except that 61.1 g of 8,13-dimethyleicosadioic acid was replaced for 1,6-DDA, a polyamide was obtained in the form of pellets. The resulting polyamide had ηr of 3.39.

Using 1500 g of the resulting polyamide pellets, an unstretched film, stretched film and simultaneous biaxial stretching film were prepared in a similar manner to Example 7. The whole-molecule planar orientation of the stretched film and the tensile modulus, tensile breaking stress and elongation at break of the simultaneous biaxial stretching film were measured. The results are shown in Tables 2 and 3.

As in Example 7, stretching properties in the successive biaxial stretching were also evaluated. Upon secondary stretching, the film break occurred at a draw ratio of 3.9 times.

COMPARATIVE EXAMPLE 4

In a similar manner to Example 7 except that 2200 g of CL and 116 g of distilled water were charged, 1530 g of a polyamide was obtained in the form of pellets. The resulting polyamide had a relative viscosity of 3.57.

Using 1500 g of the resulting polyamide pellets, an unstretched film, stretched film and simultaneous biaxial stretching film were prepared in a similar manner to Example 7. The whole-molecule planar orientation of the stretched film and the tensile modulus, tensile breaking stress and elongation at break of the simultaneous biaxial stretching film were measured. The results are shown in Tables 2 and 3.

As in Example 7, stretching properties in the successive biaxial stretching were also evaluated. Upon secondary stretching, the film break occurred at a draw ratio of 1.3 times and before break, uneven stretching was observed.

COMPARATIVE EXAMPLE 5

In a similar manner to Example 7 except that 2200 g of CL, 30.1 g of hexamethylenediamine, 38.9 g of adipic acid and 119 g of distilled water charged, 1640 g of a polyamide was obtained in the form of pellets. The resulting polyamide had a relative viscosity of 3.50.

Using 1500 g of the resulting polyamide pellets, an unstretched film, stretched film and simultaneous biaxial stretching film were prepared in a similar manner to Example 7. The whole-molecule planar orientation of the stretched film and the tensile modulus, tensile breaking stress and elongation at break of the simultaneous biaxial stretching film were measured. The results are shown in Tables 2 and 3.

As in Example 7, stretching properties in the successive biaxial stretching were also evaluated. Upon secondary stretching, the film break occurred at a draw ratio of 2.5 times and before break, uneven stretching was observed.

Table 2

| Example No. | Whole-molecule planar orientation $\times 10^3$ | | |
|---|---|---|---|
| | Stretching temperature 50°C | Stretching temperature 60°C | Stretching temperature 70°C |
| Example 7 | 15.0 | 15.1 | 16.6 |
| Example 8 | 13.7 | 14.8 | 20.3 |
| Example 9 | 12.7 | 15.6 | 19.3 |
| Example 10 | 13.9 | 15.1 | 20.7 |
| Example 11 | 14.1 | 15.9 | 21.4 |
| Comp. Ex. 4 | 18.0 | 21.9 | 25.6 |
| Comp. Ex. 5 | 17.8 | 20.7 | 23.7 |

Table 3

| Properties of simultaneous biaxial stretching film | | | |
|---|---|---|---|
| | Tensile modulus GPa | Tensile breaking stress MPa | Elongation at break % |
| Example 7 | 2.0 | 205 | 81 |
| Example 8 | 2.0 | 200 | 80 |

Table 3   (continued)

| Properties of simultaneous biaxial stretching film | | | |
| --- | --- | --- | --- |
| | Tensile modulus GPa | Tensile breaking stress MPa | Elongation at break % |
| Example 9 | 2.1 | 207 | 80 |
| Example 10 | 1.9 | 200 | 88 |
| Example 11 | 1.9 | 201 | 90 |
| Comp. Ex. 4 | 1.9 | 199 | 76 |
| Comp. Ex. 5 | 1.6 | 190 | 76 |

EXAMPLE 12

A polyamide prepared in a similar manner to Example 7 was extruded by a melt extruder "CS-40-26N" (trade name; manufactured by Uniplus) at a cylinder temperature of 280°C, whereby a monofilament having a diameter of 2 mm was obtained. After the resulting monofilament was attached to a handy-type stretching machine and preheated for 5 minutes in a heating oven having an ambient temperature of 60°C, it was stretched to a draw ratio of 5.7 times at a deformation rate of 50 mm/min and the same temperature. This procedure was repeated five times. Each time, stretching could be carried out without causing break of the monofilament.

COMPARATIVE EXAMPLE 6

A polyamide prepared in a similar manner to Comparative Example 4 was extruded by a melt extruder "CS-40-26N" (trade name; manufactured by Uniplus) at a cylinder temperature of 280°C, whereby a monofilament having a diameter of 2 mm was obtained. After the resulting monofilament was attached to a handy-type stretching machine and preheated for 5 minutes in a heating oven having an ambient temperature of 60°C, it was stretched at a deformation rate of 50 mm/min and the same temperature. This procedure was repeated five times. Each time, break occurred at a draw ratio within a range of 3.7 to 4.6 times and the monofilament could not be stretched to a draw ratio of 5 times or greater.

**Claims**

1.   A polyamide having excellent stretching properties, which comprises as essential components a diamine component and a diacarboxylic acid component containing a branched chain, saturated dicarboxylic acid having 6 to 22 carbon atoms, wherein the branched chain, saturated dicarboxylic acid having 6 to 22 carbon atoms is selected from the group consisting of 1,6-decanedicarboxylic acid, 2,3-dibutylbutane dioic acid, 8-ethyloctadecanedioic acid, 8,13-dimethyleicosadioic acid, octylundecanedioic acid and 2-nonyldecanedioic acid.

2.   The polyamide having excellent stretching properties according to claim 1, wherein the diamine component contains an alicyclic diamine having one cyclohexane ring.

3.   The polyamide having excellent stretching properties according to claim 2, wherein the alicyclic diamine having one cyclohexane ring is at least one alicyclic diamine selected from bis(4-aminocyclohexyl)methane, bis(4-aminocyclohexyl)propane, 1,3-bis(aminomethyl)cyclohexane and 1,4-bis(aminomethyl)cyclohexane.

4.   The polyamide having excellent stretching properties according to claim 1, wherein the polyamide comprises 50 to 99.95 mol% of a lactam and/or aminocarboxylic acid component, 0.025 to 25 mol% of the diamine component and 0.025 to 25 mol% of the diacarboxylic acid component and the dicarboxylic acid component comprises 5 to 100 mol% of the branched chain, saturated dicarboxylic acid having 6 to 22 carbon atoms.

5.   The polyamide having excellent stretching properties according to claim 4, wherein the dicarboxylic component comprises 20 to 100 mol% of the branched chain, saturated dicarboxylic acid having 6 to 22 carbon atoms.

6.   The polyamide having excellent stretching properties according to claim 4, wherein the diamine component comprises 5 to 100 mol% of the alicyclic diamine having one cyclohexane ring.

**7.** The polyamide having excellent stretching properties according to claim 6, wherein the diamine component comprises 20 to 100 mol% of the alicyclic diamine having one cyclohexane ring.

**8.** The polyamide having excellent stretching properties according to claim 5, wherein the alicyclic diamine having one cyclohexane ring is at least on alicyclic diamine selected from bis(4-aminocyclohexyl)methane, bis(4-aminocyclohexyl)propane, 1,3-bis(aminomethyl)cyclohexane and 1,4-bis(aminomethyl)cyclohexane.

**9.** A stretched film obtained by successive biaxial stretching of a polyamide as claimed in claim 1.

**10.** A stretched film obtained by successive biaxial stretching of a polyamide as claimed in claim 4.

**Patentansprüche**

**1.** Ein Polyamid mit exzellenten Dehneigenschaften, das als essentielle Komponenten eine Diaminkomponente und eine Dicarbonsäurekomponente umfasst, die eine verzweigtkettige, gesättigte Dicarbonsäure mit 6 - 22 Kohlenstoffatomen enthält, worin die verzweigtkettige, gesättigte Dicarbonsäure mit 6 - 22 Kohlenstoffatomen aus der Gruppe ausgewählt ist, die aus 1,6-Decandicarbonsäure, 2,3-Dibutylbutandicarbonsäure, 8-Ethyloctadecandicarbonsäure, 8,13-Dimethyleicosadicarbonsäure, 2-Octylundecandicarbonsäure und 2-Nonyldecandicarbonsäure besteht.

**2.** Das Polyamid mit exzellenten Dehneigenschaften gemäß Anspruch 1, worin die Diaminkomponente ein alizyklisches Diamin mit einem Cyclohexanring enthält.

**3.** Das Polyamid mit exzellenten Dehneigenschaften gemäß Anspruch 2, worin das alizyklische Diamin mit einem Cyclohexanring mindestens ein alizyklisches Diamin ist, das aus Bis(4-aminocyclohexyl)methan, Bis(4-aminocyclohexyl)propan, 1,3-Bis(aminomethyl)cyclohexan und 1,4-Bis(aminomethyl)cyclohexan ausgewählt ist.

**4.** Das Polyamid mit exzellenten Dehneigenschaften gemäß Anspruch 1, worin das Polypeptid 50 bis 99,95 Mol.-% einer Lactam- und/oder Aminocarbonsäurekomponente, 0,025 bis 25 Mol.-% der Diaminkomponente und 0,025 bis 25 Mol.-% der Dicarbonsäurekomponente umfasst, und die Dicarbonsäurekomponente umfasst 5 bis 100 Mol.-% der verzweigtkettigen, gesättigten Dicarbonsäure mit 6 bis 22 Kohlenstoffatomen.

**5.** Das Polyamid mit exzellenten Dehneigenschaften gemäß Anspruch 4, worin die Dicarbonsäurekomponente 20 bis 100 Mol.-% der verzweigtkettigen, gesättigten Dicarbonsäure mit 6 bis 22 Kohlenstoffatomen umfasst.

**6.** Das Polyamid mit exzellenten Dehneigenschaften gemäß Anspruch 4, worin die Diaminkomponente 5 bis 100 Mol.-% des alizyclischen Diamins mit einem Cyclohexanring umfasst.

**7.** Das Polyamid mit exzellenten Dehneigenschaften gemäß Anspruch 6, worin die Diaminkomponente 20 bis 100 Mol.-% des alizyklischen Diamins mit einem Cyclohexanring umfasst.

**8.** Das Polyamid mit exzellenten Dehneigenschaften gemäß Anspruch 5, worin das alizyklische Diamin mit einem Cyclohexanring mindestens ein alizyklisches Diamin ist, das aus Bis(4-aminocyclohexyl)methan, Bis(4-aminocyclohexyl)propan, 1,3-Bis(aminomethyl)cyclohexan und 1,4-Bis(aminomethyl)cyclohexan ausgewählt ist.

**9.** Ein gedehnter Film, der durch aufeinanderfolgendes biaxiales Dehnen eines Polyamids, wie es in Anspruch 1 beansprucht wird, erhalten wird.

**10.** Ein gedehnter Film, der durch aufeinanderfolgendes biaxiales Dehnen eines Polyamids, wie es in Anspruch 4 beansprucht wird, erhalten wird.

**Revendications**

**1.** Polyamide ayant d'excellentes propriétés d'étirage, lequel comprend comme composants essentiels un composant diamine et un composant acide dicarboxylique contenant un acide dicarboxylique saturé à chaîne ramifiée ayant 6 à 22 atomes de carbone, dans lequel l'acide dicarboxylique saturé à chaîne ramifiée ayant 6 à 22 atomes de carbone est choisi dans le groupe constitué de l'acide 1,6-décanedicarboxylique, l'acide 2,3-dibutylbutanedioïque, l'acide 8-éthyloctadécanedioïque, l'acide 8,13-diméthyléicosadioïque, l'acide 2-octylundécanedioïque et l'acide 2-nonyidécanedioïque.

2. Polyamide ayant d'excellentes propriétés d'étirage selon la revendication 1, dans lequel le composant diamine contient une diamine alicyclique ayant un cycle cyclohexane.

3. Polyamide ayant d'excellentes propriétés d'étirage selon la revendication 2, dans lequel la diamine alicyclique ayant un cycle cyclohexane est au moins une diamine alicyclique choisie entre le bis(4-aminocydohexyl)méthane, le bis(4-aminocyclohexyl)propane, le 1,3-bis(aminométhyl)cyclohexane et le 1,4-bis(aminométhyl)cyclohexane.

4. Polyamide ayant d'excellentes propriétés d'étirage selon la revendication 1, dans lequel le polyamide comprend 50 à 99,95 mol% d'un composant lactame et/ou acide aminocarboxylique, 0,025 à 25 mol% du composant diamine et 0,025 à 25 mol% du composant acide dicarboxylique et le composant acide dicarboxylique comprend 5 à 100 mol% de l'acide dicarboxylique saturé à chaîne ramifiée ayant 6 à 22 atomes de carbone.

5. Polyamide ayant d'excellentes propriétés d'étirage selon la revendication 4, dans lequel le composant dicarboxylique comprend 20 à 100 mol% de l'acide dicarboxylique saturé à chaîne ramifiée ayant 6 à 22 atomes de carbone.

6. Polyamide ayant d'excellentes propriétés d'étirage selon la revendication 4, dans lequel le composant diamine comprend 5 à 100 mol% de la diamine alicyclique ayant un cycle cyclohexane.

7. Polyamide ayant d'excellentes propriétés d'étirage selon la revendication 6, dans lequel le composant diamine comprend 20 à 100 mol% de la diamine alicyclique ayant un cycle cyclohexane.

8. Polyamide ayant d'excellentes propriétés d'étirage selon la revendication 5, dans lequel la diamine alicyclique ayant un cycle cyclohexane est au moins une diamine alicyclique choisie entre le bis(4-aminocyclohexyl)méthane, le bis(4-aminocydohexy))propane, le 1,3-bis(aminométhyl)cyclohexane et le 1,4-bis(aminométhyl)cyclohexane.

9. Film étiré obtenu par étirage biaxial en cascade d'un polyamide selon la revendication 1.

10. Film étiré obtenu par étirage biaxial en cascade d'un polyamide selon la revendication 4.